Europäisches Patentamt

European Patent Office

Office européen des brevets

(19)

(11) Veröffentlichungsnummer: **0 192 934**
**B1**

(12) **EUROPÄISCHE PATENTSCHRIFT**

(45) Veröffentlichungstag der Patentschrift: **06.06.90**

(51) Int. Cl.⁵: **B 62 D 35/00**

(21) Anmeldenummer: **86100338.2**

(22) Anmeldetag: **13.01.86**

(54) Aerodynamische Verkleidung an der Unterseite von Personenwagen.

(30) Priorität: **22.02.85 DE 8505038 u**

(43) Veröffentlichungstag der Anmeldung:
**03.09.86 Patentblatt 86/36**

(45) Bekanntmachung des Hinweises auf die
Patenterteilung:
**06.06.90 Patentblatt 90/23**

(84) Benannte Vertragsstaaten:
**DE FR GB IT**

(56) Entgegenhaltungen:
**FR-A-2 511 330**

(73) Patentinhaber: **Dr.Ing.h.c. F. Porsche**
**Aktiengesellschaft**
**Porschestrasse 42**
**D-7000 Stuttgart 40 (DE)**

(72) Erfinder: **Braun, Walter, Dipl.-Ing. (FH)**
**Malmsheimer Strasse 2**
**D-7032 Sindelfingen (DE)**
Erfinder: **Peter, Dietmar**
**Graf-Stauffenberg-Strasse 11**
**D-7251 Hemmingen (DE)**

Courier Press, Leamington Spa, England.

**Beschreibung**

Die Neuerung betrifft eine aerodynamische Verkleidung an der Unterseite von Personenkraftwagen, die sich zumindest in einem Teilbereich des Bugs erstreckt und unterhalb von feststehenden Aufbauteilen angeordnet ist.

Bei einer bekannten Anordnung der eingangs genannten Gattung (DE—U—1 885 798) ist an der Unterseite eines Personenwagens eine die Verkleidung bildende, dreidimensionale Kunststoffschale vorgesehen, die sich von der vorderen Stoßstange bis unter das Bodenblech hinter der Vorderachse erstreckt. Diese Verkleidung ist unter Vermittlung von örtlich angeordneten Federelementen an den beiden Stoßfängerhaltern und am Bodenblech befestigt.

Dieser Anordnung haftet der Nachteil an, daß die Verkleidung nicht funktionsgerecht am Aufbau befestigt ist. So können durch die federnde Aufhängung der Verkleidung bei ungünstiger Fahrbahnbeschaffenheit Schwingungsbewegungen der Verkleidung auftreten. Das führt einerseits zu einer Verringerung der Bodenfreiheit; andererseits werden durch die Lageveränderung der Verkleidung während der Fahrt die Strömungsverhältnisse — Luftwiderstandsbeiwert — im Unterbodenbereich ungünstig beeinflußt.

Durch das unmittelbare Heranführen der Verkleidung an den Stoßfänger ist nicht auszuschließen, daß die Verkleidung bereits bei geringen Aufprallstößen auf den Stoßfänger bleibend deformiert wird.

Darüber hinaus sind keine Vorkehrungen zum Toleranzausgleich, insbesondere in Fahrzeugquerrichtung vorgesehen, was zu Qualitätsbeanstandungen führen kann.

Aufgabe der Neuerung ist es, eine Verkleidung für die Unterseite eines Personenwagens zu schaffen, die sich problemlos an die Form der darüberliegenden Aufbauteile anpassen läßt und die bei einfacher und sicherer Befestigung strömungstechnisch eine gute Funktion aufweist.

Neuerungsgemäß wird diese Aufgabe durch die kennzeichnenden Merkmale des Anspruchs 1 gelöst. Weitere, die Neuerung in vorteilhafter Weise ausgestaltende Merkmale beinhalten die Unteransprüche.

Die mit der Neuerung hauptsächlich erzielten Vorteile sind darin zu sehen, daß durch den außenhautbündigen Anschluß der Verkleidung an die darüberliegenden Aufbauteile eine verwirbelungsarme Strömung im Bugbereich sowie im Unterbodenbereich erzielt wird. Ferner ist durch die form- und kraftschlüssige Verbindung der Verkleidung mit den darüberliegenden Aufbauteilen eine Befestigung geschaffen, die allen auftretenden Belastungen sicher standhält. Durch die Anordnung von zumindest einer längsgerichteten Dehnfalte an der Verkleidung lassen sich Fertigungs- und Herstelltoleranzen der Aufbauelemente und der Verkleidung — insbesondere in Fahrzeugquerrichtung — einfach ausgleichen, so daß stets ein einwandfreier Übergang zwischen den Aufbauelementen und der Verkleidung sichergestellt ist.

Ein Ausführungsbeispiel der Neuerung ist in der Zeichnung dargestellt und wird im folgenden näher erläutert.

Es zeigt

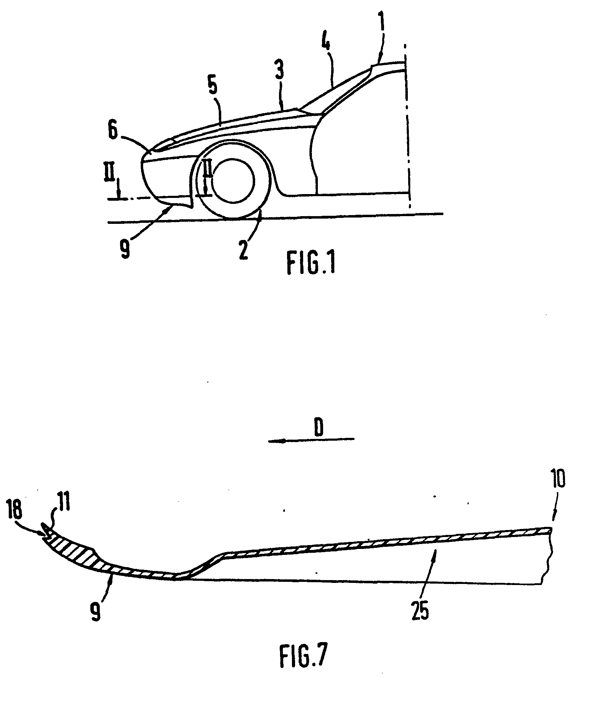

Fig. 1 eine Teilseitenansicht eines Fahrzeuges mit einer benachbart der Fahrbahn verlaufenden Verkleidung,

Fig. 2 einen Schnitt nach der Linie II-II der Fig. 1 in größerem Maßstab,

Fig. 3 einen horizontalen Mittellängsschnitt durch die Verkleidung und ein darüberliegendes Bugendteil,

Fig. 4 einen Schnitt nach der Linie IV-IV der Fig. 2 in größerem Maßstab,

Fig. 5 eine Einzelheit X der Fig. 3 in größerem Maßstab,

Fig. 6 einen Schnitt nach der Linie VI-VI der Fig. 2 in größerem Maßstab,

Fig. 7 einen Schnitt nach der Linie VII-VII der Fig. 2 in größerem Maßstab.

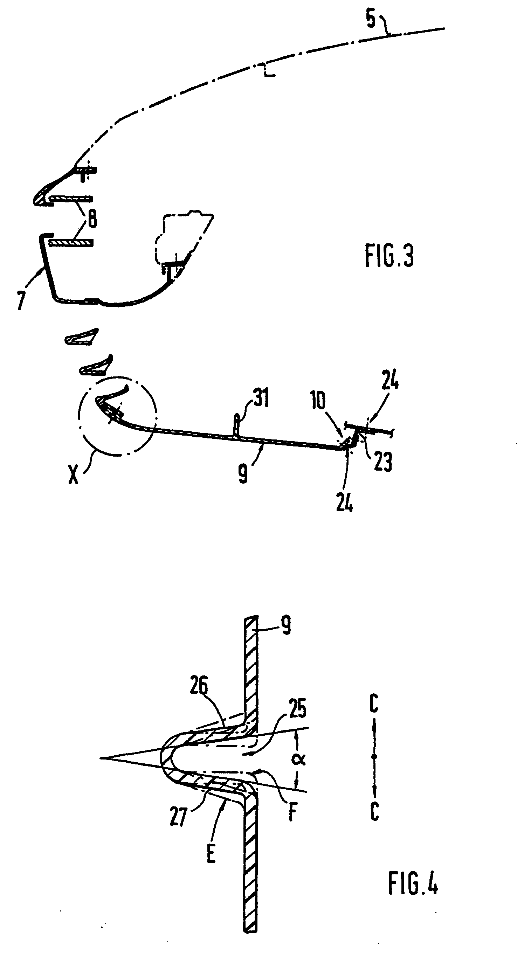

Der Personenwagen 1 besitzt im dargestellten Bereich ein Rad 2, Aufbauteile 3 und eine Windschutzscheibe 4. Die Aufbauteile 3 setzen sich im Bugbereich aus einer Motorhaube 5, seitlichen Kotflügeln 6 und einem Bugendteil 7 zusammen. Das aus elastischem Werkstoff wie Kunststoff, PU-Schaum oder dergleichen gefertigte Bugendteil 7 erstreckt sich in Querrichtung über die gesamte Breite des Personenwagens 1 und ist seitlich bis zu vorderen Radhausausschnitten der Kotflügel 6 herangeführt. Innerhalb des Bugendteiles 7 ist verdeckt ein Stoßfänger 8 angeordnet, der über nicht näher dargestellte Halteelemente fest mit Aufbauträgern verbunden ist (Fig. 3).

Zur Erzielung einer verwirbelungsarmen Strömung an der Unterseite des Personenwagens 1 ist eine sich zumindest im Bugbereich erstreckende, aerodynamische Verkleidung 9 vorgesehen, die vorzugsweise aus elastischem Material (thermoplastische Kunststoffe, PU-Schaum oder dergl.) hergestellt und leicht lösbar mit den darüberliegenden Aufbauteilen 3 verbunden ist.

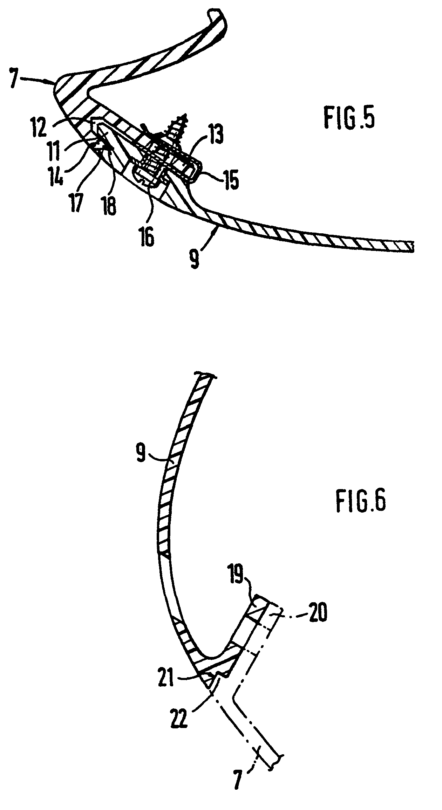

Die Verkleidung 9 ist umfangsseitig mit Ausnahme einer querverlaufenden Hinterkante 10 außenhautbündig an das darüberliegende Bugendteil 7 angeschlossen, dergestalt, daß ein glattflächiger, stufenloser Übergang zwischen Bugendteil 7 und Verkleidung 9 erzielt wird (Fig. 5 und 6).

Gemäß den Fig. 3, 5 und 6 ist die Verkleidung 9 über einen wesentlichen Teil ihres Umfanges (mit Ausnahme der Hinterkante 10) form- und kraftschlüssig mit dem Bugendteil 7 verbunden. Zur Erzielung einer formschlüssigen Verbindung weist die Verkleidung 9 benachbart des Bugendteils 7 eine zungenförmige Abstellung 11 auf, die in eine korrespondierende Ausnehmung 12 des Bugendteils 7 hineinragt.

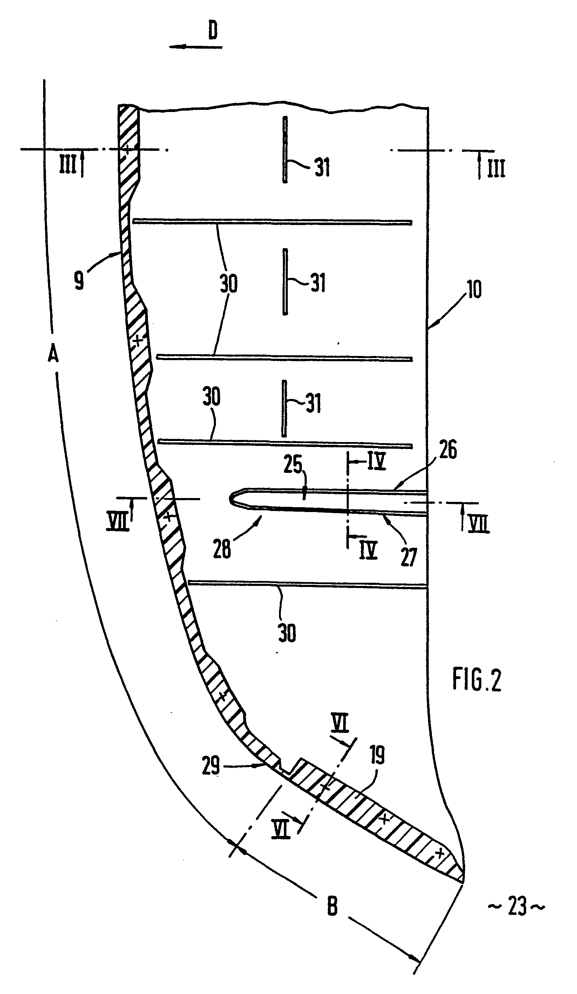

Die sich etwa über einen Bereich A erstreckende Ausnehmung 12 am Bugendteil 7 wird durch einen inneren Steg 13 und eine mit Abstand dazu verlaufende außenliegende Lippe 14 gebildet (Fig. 2). Auf den Steg 13 werden örtlich

2

Blechmuttern 15 aufgesteckt, in die von der Außenseite der Verkleidung 9 her Befestigungsschrauben 16 eingedreht sind, die die Verkleidung 9 in Lage halten. Die Befestigungsschrauben 16 bilden die kraftschlüssige Verbindung zwischen Verkleidung 9 und Bugteil 7. Nach Fig. 5 greift ferner ein freies, spitzwinkelig ausgebildete Ende 17 der Lippe 14 in eine entsprechende Aufnahme 18 der Verkleidung 9 ein (Fig. 5).

Im Bereich von seitlich außenliegenden Abschnitten B weist die Verkleidung 9 an ihrer Oberseite einen etwa vertikal nach innen abgestellten Flansch 19 auf, der mit einem parallel ausgerichteten Steg 20 des Bugendteiles 7 über örtlich angeordnete, nicht näher dargestellte Befestigungselemente verbunden ist (Fig. 6).

Zur Zentrierung der Verkleidung 9 bei der Montage ist am Flansch 19 eine etwa U-förmige Ausnehmung 21 vorgesehen, in die ein Fortsatz 22 des Bugteils 7 hineinragt.

Die einen geringeren Abstand zur Fahrbahn aufweisende Hinterkante 10 der Verkleidung 9 verläuft im Bereich der vorderen Radhausausschnitte und erstreckt sich etwa geradlinig von einer außenliegenden Fahrzeuglängsseite zur gegenüberliegenden. Es besteht aber auch die Möglichkeit, daß die Verkleidung 9 über die Vorderachse hinaus nach hinten weitergeführt ist.

Im Bereich der Hinterkante 10 der Verkleidung 9 sind örtlich Haltewinkel 23 und Befestigungselemente 24 zu ihrer Fixierung am Aufbau vorgesehen (Fig. 3).

Außerdem weist die Verkleidung 9 zumindest eine sich in Fahrzeuglängsrichtung erstreckende Dehnfalte 25 auf, mittels der Toleranzen in Fahrzeugquerrichtung C-C ausgleichbar sind. Die Dehnfalte 25 verläuft über einen wesentlichen Teil der Länge der Verkleidung 9. Zur Erzielung einer ausreichenden Bodenfreiheit des Personenwagens 1 erstreckt sich die Dehnfalte 25 in Richtung zu den darüberliegenden Aufbauteilen 3. Die Dehnfalte 25 könnte jedoch auch nach unten zur Fahrbahn hin gerichtet sein.

Gemäß Fig. 4 ist die Dehnfalte 25 im Querschnitt etwa U-oder V-förmig ausgebildet, wobei die beiden Stege 26, 27 unter einem spitzen Winkel zueinander verlaufen.

Die Höhe und Breite der Dehnfalte 25 wird entgegen der Fahrtrichtung D kontinuierlich größer, d. h., sie ist im Bereich der Hinterkante 10 der Verkleidung 9 am größten. Nach hinten hin ist die Dehnfalte 25 zwischen den Stegen 26, 27 offen ausgebildet.

Im Ausführungsbeispiel weist die Verkleidung 9 beiderseits einer Längsmittelebene C-C bei 28 jeweils längsgerichtete Dehnfalten 25 auf. Damit die seitlich außenliegenden, einen stark gebogenen Formverlauf aufweisenden Abschnitte 29 der Verkleidung 9 außenhautbündig an die darüberliegenden Aufbauteile 3 anpaßbar sind, sind die Dehnfalten 25 vorzugsweise benachbart von diesen Abschnitten 29 vorgesehen. Durch die Anordnung von Dehnfalten 25 kann die Verkleidung 9 in Fahrzeugquerrichtung C-C in einem gewissen Maße entweder gestreckt (Lage E) oder gestaucht (Lage F) werden, wodurch ein Toleranzausgleich gewährleistet ist.

Die Verkleidung 9 weist umlaufend im Anschlußbereich zum Bugendteil 7 eine größere Wandstärke auf als im übrigen Bereich. Ferner sind an der Verkleidung 9 mehrere, in Fahrzeuglängs- und Querrichtung verlaufende Versteifungsrippen 30, 31 vorgesehen, damit eine ausreichende Eigensteifigkeit der Verkleidung 9 bei gleichzeitig geringem Gewicht gegeben ist.

**Patentansprüche**

1. Aerodynamische Verkleidung an der Unterseite von Personenwagen, die sich zumindest in einem Teilbereich des Bugs erstreckt und unterhalb von feststehenden Aufbauteilen angeordnet ist, dadurch gekennzeichnet, daß die Verkleidung (19) umfangsseitig mit Ausnahme einer querverlaufenden Hinterkante (10) außenhautbündig an die darüberliegenden Aufbauteile (3) angeschlossen und mit diesen form- und kraftschlüssig verbunden ist und daß an der Verkleidung (9) zumindest eine in Fahrzeuglängsrichtung ausgerichtete Dehnfalte (25) vorgesehen ist, die über einen wesentlichen Teil der Länge der Verkleidung (9) verläuft.

2. Aerodynamische Verkleidung nach Anspruch 1, dadurch gekennzeichnet, daß das die Verkleidung (9) tragende Aufbauteil (3) durch ein aus elastischem Werkstoff gefertigtes Bugendteil (7) gebildet wird, das seitlich bis zu vorderen Radhausausschnitten des Personenwagens herangeführt ist.

3. Aerodynamische Verkleidung nach Anspruch 1, dadurch gekennzeichnet, daß an der Verkleidung (9) benachbart des Bugendteils (7) eine zungenförmige Abstellung (11) angeordnet ist, die in eine korrespondierende Ausnehmung (12) des Bugendteils (17) hineinragt.

4. Aerodynamische Verkleidung nach Anspruch 3, dadurch gekennzeichnet, daß die Ausnehmung (12) in einem Bereich (A) des Bugendteils (7) von einem inneren Steg (13) und einer außenliegenden Lippe (14) begrenzt wird, wobei auf den Steg (13) örtlich Blechmuttern (15) aufgeklipst sind, in die die Verkleidung (9) in Lage haltende Befestigungsschrauben (16) eingedreht sind.

5. Aerodynamische Verkleidung nach Anspruch 1, dadurch gekennzeichnet, daß die Dehnfalte (25) im Querschnitt etwa U- oder V-förmig ausgebildet sind.

6. Aerodynamische Verkleidung nach den Ansprüchen 1 und 5, dadurch gekennzeichnet, daß die Dehnfalte (25) nach innen zu den darüberliegenden Aufbauteilen (3) gerichtet ist.

7. Aerodynamische Verkleidung nach Anspruch 1, dadurch gekennzeichnet, daß die Verkleidung (9) zwei mit Abstand zueinander angeordnete Dehnfalten (25) aufweist, die benachbart von seitlich außenliegenden Abschnitten (31) der Verkleidung (9) vorgesehen sind.

8. Aerodynamische Verkleidung nach einem oder mehreren der vorhergehenden Ansprüche, dadurch gekennzeichnet, daß die Höhe und Breite der Dehnfalten (25) entgegen der Fahrtrichtung (D) kontinuierlich größer wird.

9. Aerodynamische Verkleidung nach Anspruch 1, dadurch gekennzeichnet, daß im Bereich der Hinterkante (10) der Verkleidung (9) örtlich Haltewinkel (23) und Befestigungselemente (24) zu ihrer Befestigung am Aufbau vorgesehen sind.

**Revendications**

1. Revêtement aérodynamique, sur la face inférieure de voitures de tourisme, qui s'étend au moins dans une zone partielle de l'avant, et est placé au-dessous d'éléments fixes de la carrosserie, caractérisé en ce que le revêtement (19) se raccorde, périphériquement, à l'exception d'un bord arrière (10) perpendiculaire, aux éléments de carrosserie (3) situés au-dessus, dans l'alignement de l'enveloppe extérieure, et est relié à ceux-ci, par concordance de forme et par force, et en ce qu'on prévoit sur le revêtement (9), au moins un pli de dilatation (25), orienté dans la direction longitudinale du véhicule, qui s'étend sur une grande partie de la longueur du revêtement (9).

2. Revêtement aérodynamique selon la revendication 1, caractérisé en ce que l'élément de carrosserie (3) portant le revêtement (9), est formé par une partie terminale de l'avant (7), réalisée dans un matériau élastique, qui s'étend latéralement jusqu'aux découpes des logements de roues avant de la voiture de tourisme.

3. Revêtement aérodynamique selon la revendication 1, caractérisé en ce qu'on place, sur le revêtement (9), à proximité de la partie terminale avant (7), une saillie (11), en forme de languette, qui s'engage dans un évidement (12) correspondant de la partie terminale avant (17).

4. Revêtement aérodynamique selon la revendication 3, caractérisé en ce que l'évidement (12) est limité, dans une région (A) de la partie terminale avant (7), par une cloison intérieure (13) et une lèvre (14) extérieure, des écrous en tôle (15) étant clipsés par endroits sur la cloison (13), écrous dans lesquels sont vissées des vis de fixation (16) maintenant le revêtement (9) dans sa position.

5. Revêtement aérodynamique selon la revendication 1, caractérisé en ce que le pli de dilatation (25) est de section transversale à peu près en U ou en V.

6. Revêtement aérodynamique selon les revendications 1 et 5, caractérisé en ce que le pli de dilatation (25) est dirigé vers l'intérieur, vers les éléments de carrosserie (3) situés au-dessus.

7. Revêtement aérodynamique selon la revendication 1, caractérisé en ce que le revêtement (9) comporte deux plis de dilatation (25), espacés l'un de l'autre, qui sont prévus à proximité de portions (31) du revêtement (9), situées latéralement à l'extérieur.

8. Revêtement aérodynamique selon une ou plusieurs des revendications ci-dessus, caractérisé en ce que la hauteur et la largeur des plis de dilatation (25) augmentent en continu, dans le sens contraire au sens de la marche (D).

9. Revêtement aérodynamique selon la revendication 1, caractérisé en ce qu'on prévoit, dans la zone du bord arrière (10) du revêtement (9), par endroits, des équerres de maintien (23) et des éléments de fixation (24), en vue de sa fixation sur la carrosserie.

**Claims**

1. An aerodynamic fairing on the underside of cars, which extends at least in a partial area of the front and is arranged below stationary parts of the body, characterized in that the fairing (19) is attached to the superposed parts (3) of the body and is flush with the outer skin over the periphery except for a transversely extending rear edge (10), and is connected thereto with positive and non-positive locking, and at least one expansion fold (25) is provided on the fairing (9), the said expansion fold (25) being orientated in the longitudinal direction of the vehicle and extending over a substantial part of the length of the fairing (9).

2. An aerodynamic fairing according to Claim 1, characterized in that the part (3) of the body carrying the fairing (9) is formed by a front end part (7) produced from resilient material and brought forward laterally as far as the front wheel arches of the passenger car.

3. An aerodynamic fairing according to Claim 1, characterized in that a tongue-shaped projection (11) projecting into a corresponding recess (12) in the front end part (17) [sic] is provided on the fairing (9) adjacent the front end part (7).

4. An aerodynamic fairing according to Claim 3, characterized in that the recess (12) is bounded in a region (A) of the front end part (7) by an inner web (13) and an external lip (14), sheet-metal nuts (15), into which fastening screws (16) holding the fairing (9) in position are screwed, being clipped locally onto the web (13).

5. An aerodynamic fairing according to Claim 1, characterized in that the expansion fold (25) is made approximately U-shaped or V-shaped in cross-section.

6. An aerodynamic fairing according to Claims 1 and 5, characterized in that the expansion fold (25) is orientated inwardly towards the superposed parts (3) of the body.

7. An aerodynamic fairing according to Claim 1, characterized in that the fairing (9) has two expansion folds (25) arranged at a distance from each other and provided adjacent to portions (31) of the fairing (9) lying laterally on the outside.

8. An aerodynamic fairing according to one or more of the preceding Claims, characterized in that the height and width of the expansion folds (25) become continuously greater contrary to the direction of travel (D).

9. An aerodynamic fairing according to Claim 1, characterized in that holding angles (23) and fastening elements (24) are provided locally in the region of the rear edge (10) of the fairing (9) for fastening the latter to the body.

FIG.1

D

FIG.7

FIG.2

FIG.3

FIG.4

EP 0 192 934 B1

FIG.5

FIG.6

4